# EUROPEAN PATENT SPECIFICATION

(11) **EP 0 959 345 B1**
(45) Date of publication and mention of the grant of the patent: **24.03.2010**
(21) Application number: 99303849.6
(22) Date of filing: 18.05.1999
(51) Int. Cl.: G01N 23/20, G06F 17/00

(54) **Diffraction condition simulation device, diffraction measurement system, and crystal analysis system**
Diffraktionsbedingungssimulationsvorrichtung, Diffraktionsmessvorrichtung und Kristallanalysesystem
Dispositif de simulation de conditions de diffraction, système de mesure de diffraction et système d' analyse à cristal

(30) Priority: 18.05.1998 JP 13529798; 12.05.1999 JP 13190699
(43) Date of publication of application: 24.11.1999
(73) Proprietor: Rigaku Corporation, Akishima-shi, Tokyo 196 (JP)
(72) Inventor: Yokoyama, Ryouichi, Akishima-shi, Tokyo (JP); Endo, Kamihisa, Akishima-shi, Tokyo (JP); Ozawa, Tetsuya, Akishima-shi, Tokyo (JP); Harada, Jimpei, Akishima-shi, Tokyo (JP)
(74) Representative: Jackson, Robert Patrick

(56) References cited:
- GB-A- 2 290 689
- US-A- 4 412 345
- PATENT ABSTRACTS OF JAPAN vol. 1997, no. 08, 29 August 1997 (1997-08-29) -& JP 09 097278 A (SHIMADZU CORP), 8 April 1997 (1997-04-08)

## Description

The present invention relates to a diffraction condition simulation device, a diffraction measurement system, and a crystal analysis system. More particularly, the present invention relates to a novel diffraction condition simulation device, a diffraction measurement system, and a crystal analysis system which are useful for structure analysis and structure evaluation of a crystal sample such as a wafer for a semiconductor or a thin film diposited on the wafer.

In crystal structure analysis developed as analysis of atomic structure, X rays, or particle beams such as neutron beams or electron beams are applied to a crystal sample with the unknown structure, and then, using diffraction phenomenon of scattered rays by the crystal sample, the lattice type of the crystal sample or the atomic arrangement in the lattice are clarified. In this crystal structure analysis, for example, X rays are used for the analysis of the electron density of the crystal sample, neutron beams are used for the analysis of the atomic nuclei position of the crystal sample, and electron beams are used for the analysis of the electric potential of the crystal sample.

For such crystal structure analysis, diffraction condition simulation described below is frequently carried out. First, a reciprocal lattice intrinsic to a crystal is calculated on the basis of crystal information such as known lattice constants. Then, using this reciprocal lattice simulation incident angles and outgoing angles of X ray or particle beams, or ω angles, χ angles, and φ angles as orientation angles of the crystal which satisfy Bragg scattering conditions, or intensity information are obtained.

However, in conventional simulation devices for carrying out such diffraction condition simulation, although a section of the limiting sphere containing reciprocal lattice points which express the Bragg reflection caused by a crystal sample is shown, the displayed section of the limiting sphere cannot be rotated freely and continuously in accordance with a crystal orientation. Thus, it has been impossible to display a desired reciprocal lattice quickly and easily.

Further, in general, there are innumerable diffraction conditions which cause one Bragg reflection, by rotating along a reciprocal lattice vector of a crystal, and the orientation angles, i.e., ω angle, χ angle, φ angle, of the crystal is determined for each of the innumerable diffraction conditions. However, the conventional device is limited to the reflection condition where the χ angle of the crystal sample is minimum, or to the symmetric reflection condition where the incident angle is the same as the outgoing angle, so that the orientation angles of the crystal obtained for one Bragg diffraction condition have been extremely limited.

Moreover, diffraction information obtained from simulation display of a conventional simulation device has been insufficient for the crystal structure analysis. For example, the intensity to the Bragg reflection can not be obtained, or the Bragg reflection is displayed without any distinction between a reflection with the intensity of more than 0 (here, called a general reflection) and a forbidden reflection with the intensity which is theoretically 0, making it difficult to distinguish between the general reflection and the forbidden reflection.

Since the conventional simulation device has a lot of restrictions as to display of reciprocal lattices or diffraction information as described above, it is earnestly desired to realize a device capable of carrying out the more excellent diffraction condition simulation.

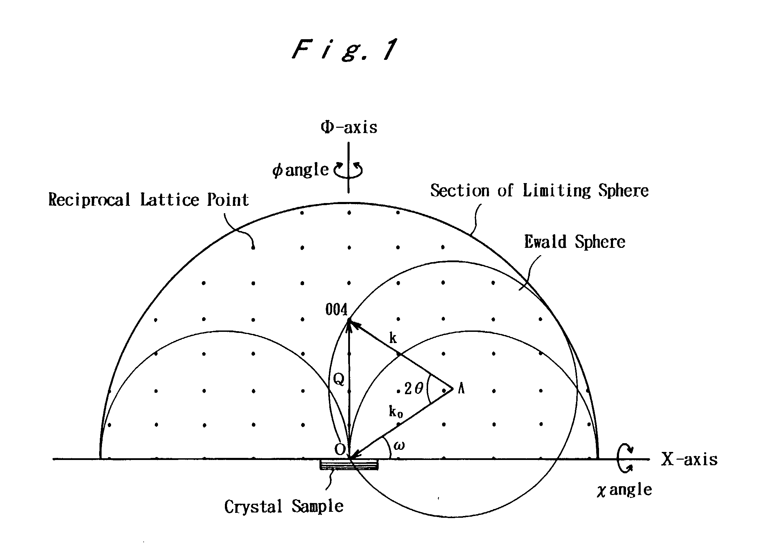

Here, the limiting sphere is, as exemplified in Fig. 1, a sphere which contains the reciprocal lattice points of the reciprocal lattice of a crystal sample, and has a radius of 2/λÅ⁻¹ (λ is a wavelength of X rays or particle beams) with the center at the origin O of the reciprocal lattice of the crystal sample. This limiting sphere indicates a range where an Ewald sphere (or called a reflection sphere) can be rotated, the Ewald sphere having a radius of 1/λ with the center A of a generation source which emits X-ray or particle beams incident toward the origin O of the reciprocal lattice of the crystal sample and containing the origin O of the reciprocal lattice on its circumference. When the incident angle ω of X rays or particle beams to a crystal sample (concretely, the origin O of the reciprocal lattice of the crystal sample) is changed, the Ewald sphere rotates around the origin O of the reciprocal lattice in accordance with the incident angle ω within the limiting sphere, and when the Ewald sphere comes in contact with a reciprocal lattice point in the limiting sphere, that is, when the reciprocal lattice point is placed on the circumference of the Ewald sphere, the Bragg reflection of X rays or particle beams occurs from the position A toward the reciprocal lattice point placed on the circumference of the Ewald sphere. Incidentally, each of the reciprocal lattice points is normally labeled by Miller indices hkl as integers.

In an example shown in Fig. 1, the incidence of X rays or particle beams is indicated by a vector k₀, Bragg diffraction(that is, an outgoing reflection from the crystal) of the incident X rays or particle beams is expressed by a vector k, and a scattering vector equal to a difference between the vector k₀ and the vector k is expressed by Q. The Bragg reflection is labeled by Miller indices of 004 (= hkl).

Incidentally, the foregoing χ angle and the φ angle of the crystal sample are, as exemplified in Fig. 1, a rotation angle of the crystal sample in the case where it rotates along an axis (X-axis in the drawing) parallel to the plane of the crystal sample, and a rotation angle of the crystal sample in the case where it rotates along an axis (Φ-axis in the drawing) extending vertically to the plane of the crystal sample, respectively, and they are angles to determine the orientation of the crystal sample together with the ω angle used to determine the incident angle of X rays or particle beams to the crystal sample.

This invention has been made in view of the foregoing circumstances, and an object thereof is to provide a novel diffraction condition simulation device, a diffraction measurement system, and/or a crystal analysis system which at least in their preferred forms overcome or at least mitigate the problems of the prior art and are capable of quickly and easily calculating and displaying a desired Bragg reflection satisfying various diffraction conditions necessary for structure analysis and characterization of a crystal structure.

Certain embodiments of the invention will now be described, by way of example only and with reference to the accompanying drawings:
in which:
   Fig. 1 is a conceptual view exemplifying a limiting sphere and an Ewald sphere of a crystal sample.
   Fig. 2 is a view showing an example of screen display of a computer by a diffraction condition simulation device of the present invention.
   Fig. 3 is a view showing an example of display of a Bragg reflection on the screen display of Fig. 2.
   Fig. 4 is a view showing an example of enlarged display of the Bragg reflection on the screen display of Fig. 2.
   Fig. 5 shows an overall flow of simulation operation by a diffraction condition simulation device of the present invention.
   Fig. 6 shows an operation flow of crystal sample information input.
   Fig. 7 shows an operation flow of diffraction plane display.
   Fig. 8 shows an operation flow to specify a diffraction point.
   Fig. 9 shows an operation flow of renewal of incident angle•outgoing angle.
   Fig. 10 shows an operation flow of renewal of χ angle and Φ angle.
   Fig. 11 is a view showing an example of crystal orientations drawing on a computer screen by a diffraction condition simulation device of the present invention.
   Fig. 12 schematically illustrates an example of a diffractometer consisting of a four-axis goniometer, an X-ray source, and a detector.
   Fig. 13 schematically illustrates one embodiment of a diffraction measurement system and a crystal analysis system of the present invention.
   Fig. 14 is a view showing an example of a reciprocal lattice map measured by a diffraction measurement system of the present invention.

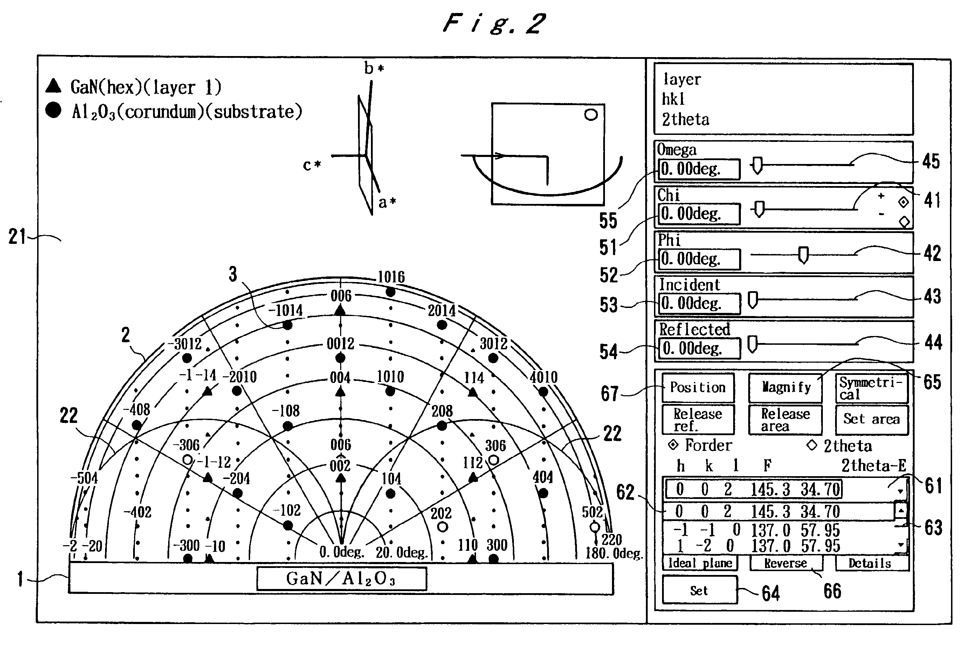

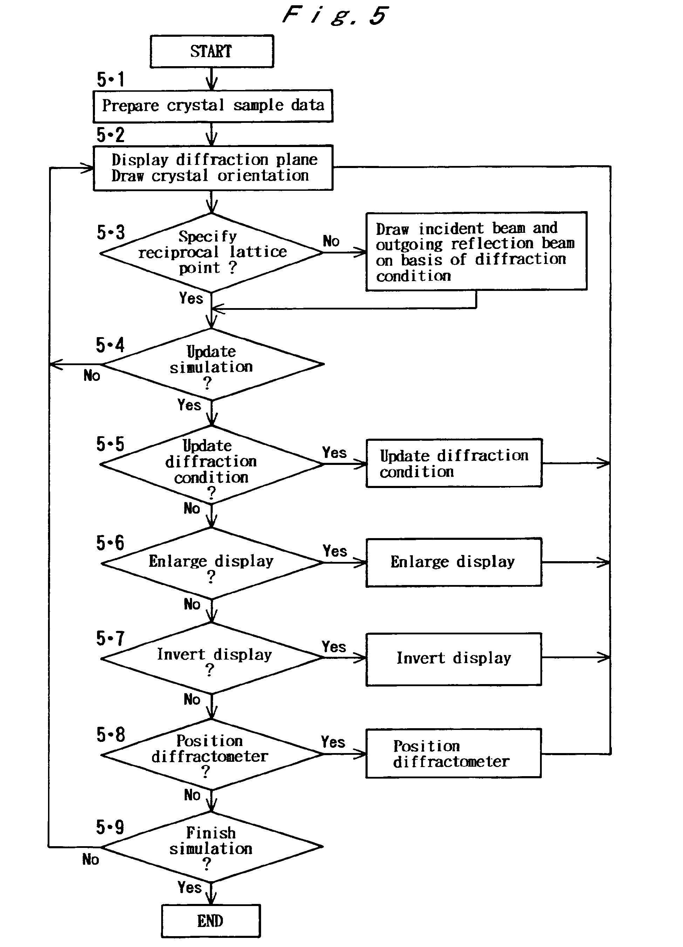

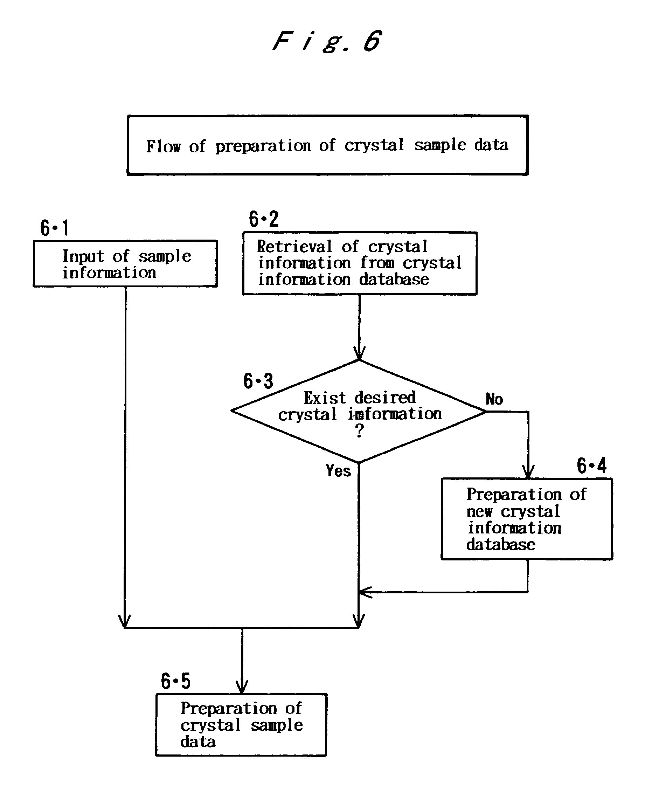

Figs. 2 to 4 show an embodiment of computer screen display by a diffraction condition simulation device of this invention, and in this embodiment, GaN/Al₂O₃ is used as a crystal sample, and X rays are used as an incident wave. Fig. 5 exemplifies the overall flow of simulation operation by the diffraction condition simulation device of this invention, and Fig. 6 to 12 exemplify the detailed flow of each simulation operation in Fig. 5.

In the following, the diffraction condition simulation device of this invention will be described in detail along the rough flow of the simulation operation shown in Fig. 5 and using the detailed flows of Figs. 6 to 12, with suitably referring to the examples of the computer screen display of Figs. 2 to 4.

### Flow of preparation of crystal sample data [Fig. 5 step 5•1 Fig. 6]

First, crystal sample data intrinsic to a crystal sample are prepared [step 5.1]. The crystal data are calculated, for example, along the flow exemplified in Fig. 6 by using information (hereinafter referred to as crystal information) intrinsic to the crystal constituting the crystal sample, such as a composition ratio in the case of a solid solution, space group, lattice constants, atomic positions in a crystal lattice, temperature factors, and elastic constants, and information (hereinafter referred to as sample information) non-intrinsic to the sample, such as a sample name, an orientation of the sample normal, and the incident direction of X rays or particle beams to the crystal sample. The calculated crystal sample data include the coordinates and the structure factors to all the reciprocal lattice points of the crystal sample, and the like.

More specifically, as exemplified in Fig. 6, the sample information of the crystal sample to be simulated is first inputted [step 6•1].

Furthermore, from an existing crystal information data base (this crystal information data base is, for example, previously stored in storage means) in which crystal information about various crystals constitutes a data base, the crystal information about the crystal constituting the crystal sample is retrieved [step 6•2]

In this retrieval, if the desired crystal information does not exist in the existing crystal information data base [step 6•3 No], a crystal information database of the necessary crystal is newly prepared [step 6•4]

Then, by using the inputted sample information[step 6 • 1] and either the crystal information retrieved from the existing crystal information database[step 6•3 Yes] or the crystal information from the newly prepared crystal information database [step 6•4], the crystal sample data such as the coordinates and the structure factors to all the reciprocal lattice points in the limiting sphere of the crystal sample are calculated [step 6•5]. That is, the orientation of the crystal sample is determined by the sample information, and the crystal sample data of the crystal sample in this orientation are obtained with the crystal information.

The calculation of the coordinates and the structure factors to the reciprocal lattice points carried out here is well known, the coordinates are obtained by using, for example, a well-known UB matrix (or also called uniorientation matrix), and the structure factors are obtained from the space group, the lattice constants, the atomic position, and the temperature factor.

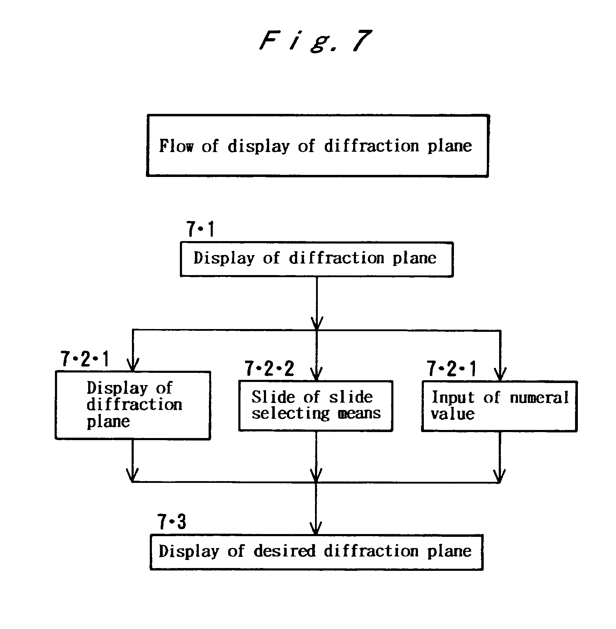

### Flow of display of diffraction plane [Fig. 5 step 5•2 Fig. 7]

Next, based on the coordinates of all the reciprocal lattice points in the crystal sample data calculated by the foregoing flow of the crystal sample data preparation, as exemplified in Fig. 2, the section where reciprocal lattice points 3 in the limiting sphere rotating in synchronizing with the rotation of a crystal intersect a diffraction plane, together with a limiting sphere section 2, is displayed on the computer screen [step 5.2]. The rotation of a crystal may be considered as the same as the rotation of a crystal orientation.

More specifically (see Fig. 7), the reciprocal lattice points 3 on the diffraction plane calculated in accordance with the rotation of a crystal sample 1, that is, calculated by using the rotation angles, the χ angle and the φ angles of the crystal sample 1, as well as the limiting sphere section 2 surrounding the reciprocal lattice points are displayed [step 7.1]. The calculation of the reciprocal lattice points 3 on the diffraction plane using the χ angle and the φ angle as the orientation angles of a crystal is well known. The diffraction plane is a plane on which both an incident vector and an outgoing reflection vector are placed.

Further, this limiting sphere section 2 is calculated on the basis of the crystal sample 1 rotated correspondingly to the moving direction of the pointer on the computer screen [step 7•2•1]. In this case, more specifically, when the pointer is moved, the crystal sample 1 is rotated along the X-axis and the Φ-axis (see Fig. 1). Thus, the χ angle and the φ angle, the rotation angles along the X-axis and the Φ-axis , are changed in accordance with the moving direction and the moving amount of the pointer, and the reciprocal lattice rotates in accordance with the change of the χ angle and the φ angle. In this rotation, the reciprocal lattice points 3 on the diffraction plane in the limiting sphere section 2 are displayed. In other words, among all the previously calculated reciprocal lattice points 3 included in the crystal sample 1, the reciprocal lattice points 3 placed on the diffraction plane by the rotated reciprocal lattice is always displayed in the limiting sphere section 2 during the rotation.

Hence, for example, if the movement of the pointer is stopped when the desired reciprocal lattice point 3 appears on the screen, the diffraction plane including the reciprocal lattice point 3 can be displayed [step 7•3]

As described above, in the diffraction condition simulation device of this invention, the limiting sphere section 2, together with the diffraction plane including the reciprocal lattice points 3, (hereinafter, it is assumed that the diffraction plane is placed in the limiting sphere section) is rotatably displayed in accordance with the rotation of the crystal sample, and the reciprocal lattice of the crystal sample 1 can be rotated along the movement of the pointer, and further, the foregoing display is always made during the rotation. Therefore, the diffraction plane containing a desired reciprocal lattice point 3 can be quickly and easily displayed.

Incidentally, the movement of the pointer is generally operated by external operating means such as a mouse or an arrow key of a keyboard. It is preferable that rotation display by the pointer is made effective in only the case where, for example, on the computer screen exemplified in Fig. 2, the pointer is positioned in a limiting sphere section display window 21 displaying the limiting sphere section 2.

The rotation of the reciprocal lattice of the crystal sample 1 may be carried out through, for example, a χ angle slide selecting means 41 and a φ angle slide selecting means 42 displayed on the computer screen exemplified in Fig. 2 [step 7•2•2].

These slide selecting means 41 and 42 are slidable by devices such as the pointer or right and left arrow keys of the keyboard, and an arbitrary numerical value of the χ angle and the φ angle of the crystal sample 1 can be selected by the slide. Thus, the χ angle and the φ angle are continuously changed correspondingly to the slide of the pointer or arrow key, and the reciprocal lattice is continuously rotated. Of course, similarly to the rotation display by the pointer, the reciprocal lattice points 3 are also always displayed, and the diffraction plane containing the desired reciprocal lattice point 3 can be quickly and easily displayed together with the limiting sphere section 2 [step 7•3].

In the example shown in Fig. 2, a χ angle numerical value display portion 51 and a φ angle numerical value display portion 52 are provided in the vicinity of the χ angle slide selection means 41 and in the vicinity of the φ angle slide selection means 42, respectively, and the χ angle and the φ angle slide-selected by the respective slide selection means 41 and 42 are displayed on the χ angle numerical value display portion 51 and the φ angle numerical value display portion 52, respectively.

At the rotation of the reciprocal lattice by the movement of the pointer as well, the numerical values of the χ angle and the φ angle accompanied by the rotation can be displayed on the χ angle numerical value display portion 51 and the φ angle numerical value display portion 52, respectively.

By such numerical value display of each angle, it is possible to know easily in what orientation of the crystal sample 1 the diffraction plane containing the desired reciprocal lattice point 3 is displayed.

Further, numerical values of the χ angle and the φ angle may be inputted by a key board or ten-key, and for example, such numerical values can be directly inputted into the χ angle numerical value display portion 51 and the φ angle numerical value display portion 52, respectively [step 7•2•3]. Then, in accordance with the inputted numerical values, the reciprocal lattice point 3 in the diffraction plane is changed [step 7•3] .

In addition, it is desirable that each of the reciprocal lattice points 3 in the diffraction plane is displayed so that the difference in magnitude of the structure factor is expressed on the basis of the structure factor previously calculated as crystal sample data. For example, such a difference may be displayed by changing the color of each of the reciprocal lattice points 3 according to the magnitude of the structure factor.

When any one of the reciprocal lattice points 3 displayed in the diffraction plane is chosen arbitrarily, the structure factor and the Miller indices hkl of the reciprocal lattice point 3 chosen are displayed in a structure factor display 61 provided on the computer screen as shown in Fig.2 as an example.

All the reciprocal lattice points 3 included in the crystal sample 1 may be arranged and displayed in order of the structure factor. In this case, for example, as shown in Fig. 2, in a reciprocal lattice point permutation display portion 62 provided on the computer screen, the Miller indices hkl and the structure factor of each reciprocal lattice point 3 are displayed in order of the magnitude of the structure factor and can be scroll-retrieved in order of the structure factor by scroll means 63 provided in the vicinity of the reciprocal lattice permutation display portion 62.

Moreover, for example, when any one of the Miller indices hkl of the reciprocal lattice point 3 displayed on the reciprocal lattice point permutation display portion 62 is selected and is specified by pressing a set button 64, the diffraction plane containing the reciprocal lattice point 3 of the selected Miller indices hkl can also be displayed.

As described above, according to the present invention, the reciprocal lattice points 3 are displayed such that the structure factor of each is displayed, and/or they are displayed such that the difference in the magnitude of the structure factor appears, and/or they are arranged and displayed in order of the magnitude of the structure factors. Consequently, the intensity of Bragg reflection can be extremely easily estimated for any reciprocal lattice points 3.

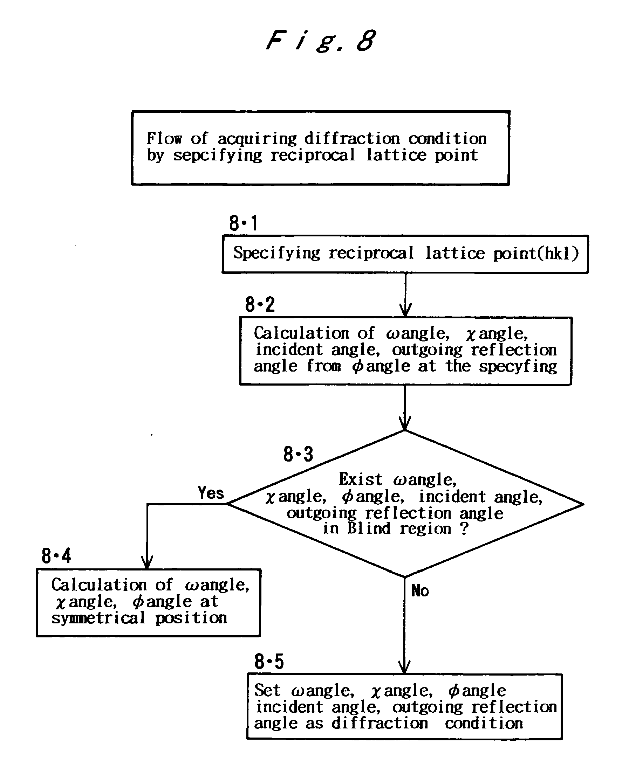

### Flow of setting up of diffraction condition by specifying reciprocal lattice point [Fig. 5 step 5•3 Fig. 8]

In the diffraction condition simulation device of this invention, the diffraction plane containing reciprocal lattice points 3 is displayed on the computer screen as described above, so that each reciprocal lattice point 3 for the crystal sample 1 can be recognized, that is, the Bragg reflection can be recognized and further, a diffraction condition of the Bragg reflection at a reciprocal lattice point 3 can be obtained by specifying the desired reciprocal lattice point 3 among all the reciprocal lattice points 3 displayed.

More specifically, along the flow shown in Fig. 8 as an example, first, a desired reciprocal lattice point 3 is specified [step 8•1]. This may be done by, for example, moving the pointer to the reciprocal lattice point 3 displayed on the screen and pressing the left button of mouse or the determination key of keyboard. If the desired reciprocal lattice point 3 is not being displayed on the screen, it may be specified by selecting, as described above, its Miller indices hkl from the reciprocal lattice point permutation display portion 61. Of course, as the Miller indices hkl are selected, the diffraction plane containing the desired reciprocal lattice point 3 is displayed on the screen.

When the desired reciprocal lattice point 3 is specified, the ω angle and the χ angle as the other orientation angles, the incident angle of X rays or particle beam (X rays in this embodiment) to the crystal sample 1, and the outgoing angle from the crystal sample 1 are calculated, using the φ angle as the specified orientation angle of the crystal sample 1 [step 8•2]. This calculation is carried out by using a well-known equation.

Next, it is evaluated whether the ω angle, the φ angle, the χ angle, the incident angle, and the outgoing angle exist in a Blind region 22 where actual measurement of the Bragg reflection can not be made [step 8•3]. This Blind region 22 is, as exemplified in Fig. 2, indicated in the limiting sphere section 2 by two small semicircles each having a diameter equal to the radius of the limiting sphere section 2.

In the case where they do not exist in the Blind region 22, the ω angle, the φ angle, the χ angle, the incident angle, and the outgoing angle are directly set as diffraction condition [step 8•5].

In the case where they exist in the Blind region 22, the ω angle, the χ angle, and the φ angle are newly calculated in a symmetrical diffraction condition where the incident angle is equal to the outgoing angle [step 8•4], and these angles are set as the diffraction condition [step 8•5].

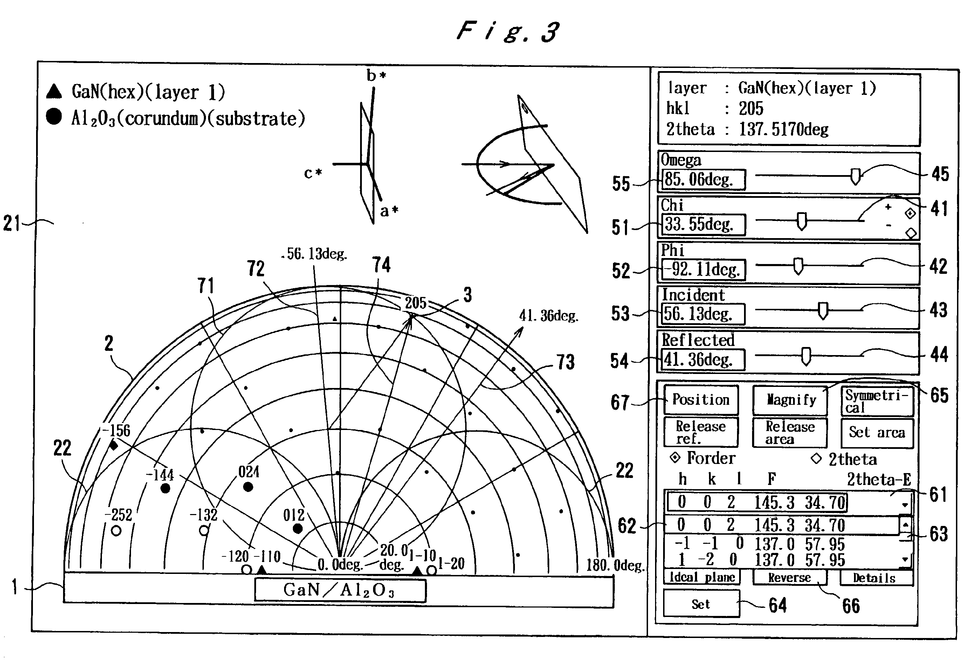

In this way, diffraction conditions of the Bragg reflection to the arbitrarily specified reciprocal lattice point 3 can be obtained. On the computer screen, as shown in Fig. 3 as an example, the Bragg reflection to the specified reciprocal lattice point 3 is displayed. In the example shown in Fig. 3, the reciprocal lattice point 3 of -205 is specified, and as the diffraction condition which satisfies the Bragg reflection to the reciprocal lattice point 3, ω angle = 105.64°, φ angle = 89.02°, χ angle = 0.74°, incident angle = 105.64°, and outgoing angle = 31.89° are obtained, and in addition, an incident line 72 of the X rays, an outgoing reflection line 73, and a reciprocal lattice vector 74 are displayed in the diffraction plane together with a Ewald sphere 71.

Additionally, the reciprocal lattice points 3 may be arranged and displayed on the reciprocal lattice permutation display portion 62 in order of the magnitude of diffraction angle 2θ of the Bragg reflection.

Furthermore, for example, it may be designed such that when the reciprocal lattice point 3 or its vicinity is clicked by the right button of a mouse, a structure factor and 2θ angle are displayed in the vicinity of the reciprocal lattice point3.

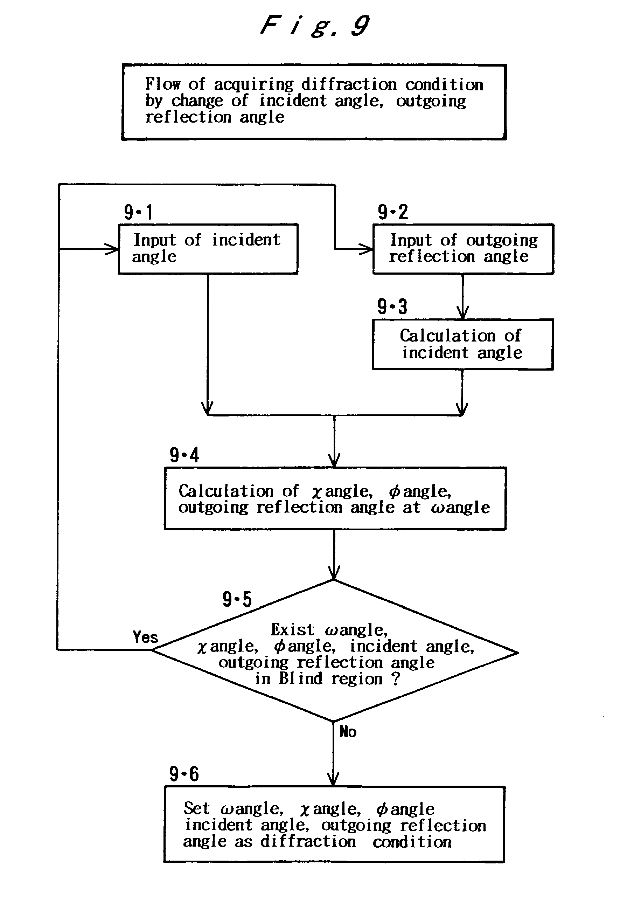

Flow of acquiring diffraction conditions by change of incident angle and outgoing angle [Fig. 5 step 5•5 Fig. 9]

In the diffraction condition simulation device of this invention, further, a diffraction condition can be changed arbitrarily (renewal of diffraction condition), thereby obtaining and displaying the Bragg reflection which satisfies new diffraction condition, that is, the reciprocal lattice point. This renewal of the diffraction condition may be carried out [step 5•5 Yes] as described below.

First of all, at least one of the incident angle or the outgoing angle among the diffraction conditions is changed, thereby acquiring a new diffraction condition.

As shown in the flow of Fig. 9, in the case where the incident angle is newly inputted [step 9•1], the ω angle, the χ angle, φ angle, and outgoing angle are calculated [step 9•4].

In the case where the outgoing angle is newly inputted [step 9•2], after calculating the incident angle by the outgoing angle inputted [step 9•3], the ω angle, χ angle, φ angle, and outgoing angle are calculated [step 9•4].

Then it is judged whether the obtained ω angle, χ angle, φ angle, incident angle, and outgoing angle exist in the Blind region 22, and if they exist in the Blind region 22, the input of incident angle or outgoing angle is again carried out [step 9•5 Yes], and if they do not exist in the Blind region 22 [step 9•5 No], the ω angle, χ angle, φ angle, incident angle, or outgoing angle are set as new diffraction conditions [step 9•6].

Here, the incident angle and the outgoing angle can be changed by, for example, as shown in Fig. 2, dragging the incident line 72 or the outgoing reflection line 73 displayed in the diffraction plane on the computer screen by a mouse through a pointer.

Selection of a new incident angle and outgoing angle can also be easily and continuously carried out by sliding the incident angle slide selecting means 43 and the outgoing angle slide selecting means 44 which are provided on the computer screen through pointer movement by mouse operation, an arrow key or the like.

Further, angles can be directly inputted in an incident angle numerical value display portion 53 and also in an outgoing angle numerical value display portion 54. These display portion 53 and 54, disposed in the vicinities of the incident angle slide selecting means 43 and the outgoing angle slide selecting means 44, respectively, display the numerical value of the incident angle and the numerical value of the outgoing angle.

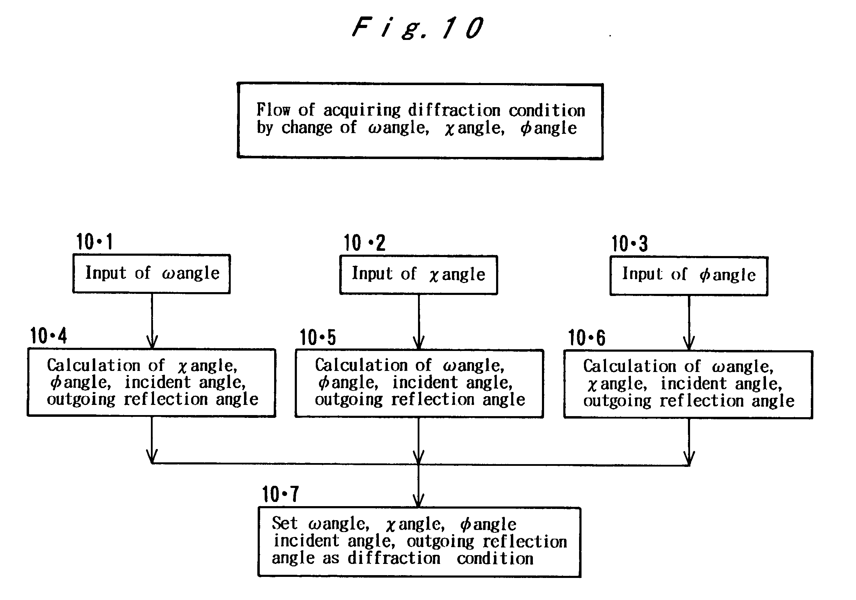

### Flow of acquiring diffraction conditions by change of ω angle, χ angle, and φ_angle [Fig. 5 step 5•5 Fig. 10]

Here, instead of changing the incident angle or the outgoing angle as described above, at least one of the ω angle, χ angle, and φ angle which define the diffraction conditions may be changed, thereby a new diffraction condition is acquired.

As shown in the flow of Fig. 10 as an example, when the ω angle is inputted [step 10•1], the χ angle, φ angle, incident angle, and outgoing angle are calculated from the inputted ω angle [step 10•4]. When the χ angle is inputted [step 10•2], the ω angle, φ angle, incident angle, and outgoing angle are calculated from the inputted χ angle [step 10•5]. When the φ angle is inputted [step 10•3], the ω angle, χ angle, incident angle, and outgoing angle are calculated from the input φ angle [step 10•6]. Then each of these angles is set as a new diffraction condition [step 10•7].

The input of these ω angle, χ angle, and φ angle can be made by selection with slide of the ω angle slide selecting means 45, the χ angle slide selecting means 41, and the φ angle slide selecting means 42, or by the input of direct numerical value to the ω angle numerical value display portion 55, the χ angle numerical value display portion 51, and the φ angle numerical value display portion 52.

Each of the inputted angles and calculated angles is set as a new diffraction condition.

As described above, each time when the diffraction condition is renewed, the Bragg reflection of the reciprocal lattice point 3 satisfying a new diffraction condition is displayed within the limiting sphere section 2.

### Enlargement display [Fig. 5 step 5•6]

Moreover, in the diffraction condition simulation device of this invention, it is preferable that the reciprocal lattice point can be displayed with enlargement.

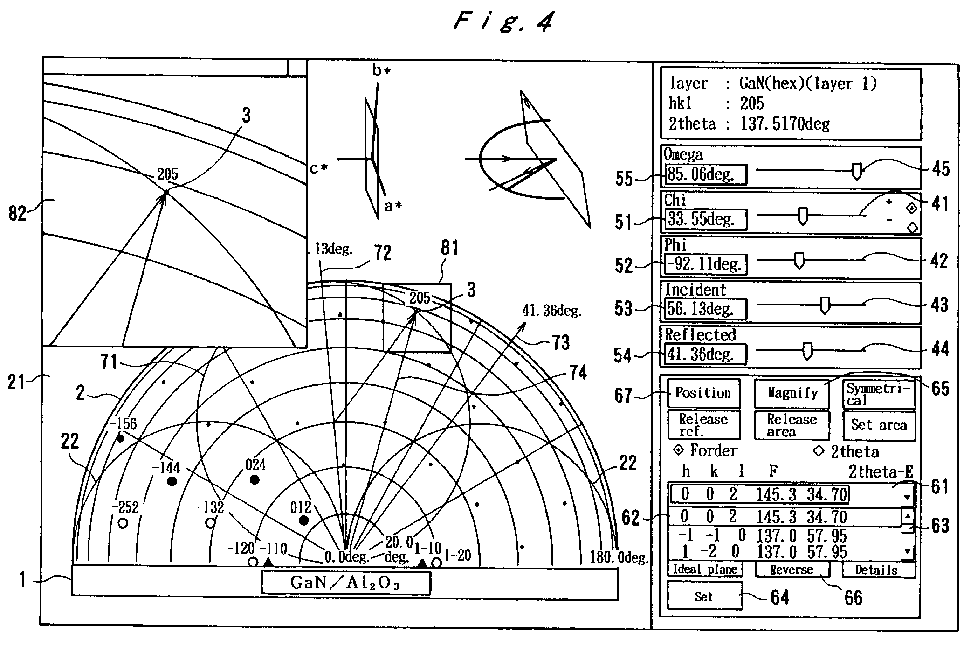

For example, in this enlargement display [step 5•6 Yes], as exemplified in Fig. 4, a region of a diffraction including reciprocal lattice point 3 is selected by a mouse operation or the like through a pointer on the screen, and this region called as an enlargement region 81 can be enlarged with an enlargement rate σ₂ of default previously set by pressing an enlargement display button 65 provided on the screen. The enlargement rate σ₂ can be changed by inputting a desired enlargement rate.

In the example shown in Fig. 4, the reciprocal lattice point 3 = 205 is specified, and the enlargement region 81 which is a peripheral region including the reciprocal lattice 3 = 205 is enlarged in the enlargement display frame 82 as a separate frame, where the diffraction condition satisfying the Bragg reflection for the reciprocal lattice point 3 = 205 is given as χ angle = 33.55°, φ angle = -92.11°, incident angle = 56.13°, and outgoing angle = 41.36°.

By such enlargement display, the resolution between Bragg reflections locating very close by each other can be improved, thereby improving the quality of display so as to be able to see the profile of reflection and crystal structure evaluation can be made easier.

### Inversion display [Fig. 5 step 5•7]

In addition, the direction of the incident angle and outgoing angle may be freely inverted. This inversion of the direction can be arbitrarily and easily inverted [step 5•7 Yes] by, for example, pressing a display inversion button 66 provided on the computer screen.

### Crystal orientation simulation [Fig. 5 step 5•2]

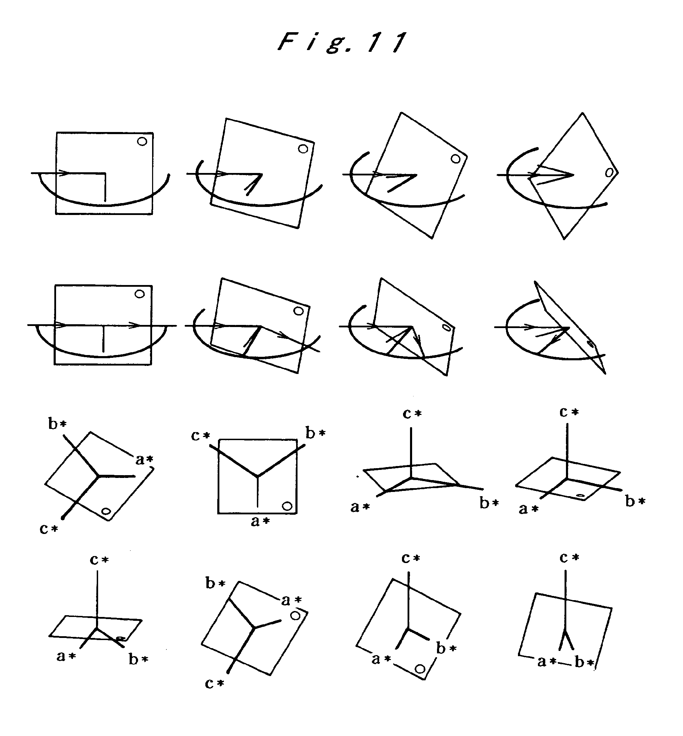

Furthermore, when the diffraction conditions are renewed as described above, the ω angle, χ angle, φ angle, incident angle, and outgoing angle as a new diffraction condition are set for a crystal orientation, and the crystal orientation is drawn on the screen, for example, as shown in Fig. 11, and further, the incident direction and outgoing direction of X rays or particle beam can also be displayed [step 5•2].

### Movement of goniometer[Fig. 5 step 5•8]

In the case where the diffraction condition simulation device of this invention is connected with a diffraction measurement system for measuring the Bragg reflection of X rays or particle beams by a crystal sample, the simulated diffraction conditions where the Bragg reflection occurs, that is, the values of the χ angle and φ angle of the crystal sample, and the incident angle (or ω angle) and outgoing angle (or diffraction angle 2θ) of X rays or particle beams can be transmitted to the diffraction measurement system by pressing a four-axis angle transmission button 67 displayed on the screen, and actual measurement of the diffraction beam satisfying the diffraction conditions, that is, the Bragg reflection can be measured in the diffraction measurement system.

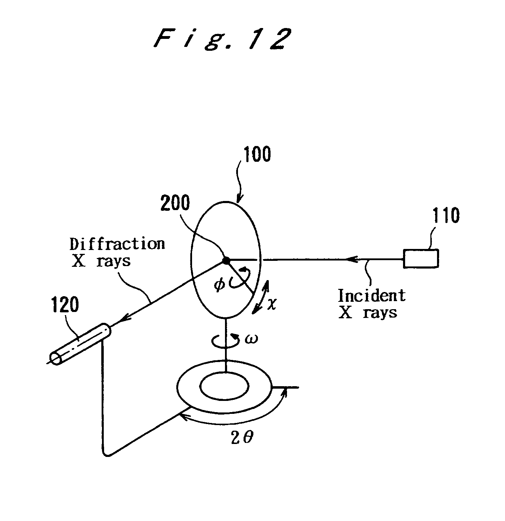

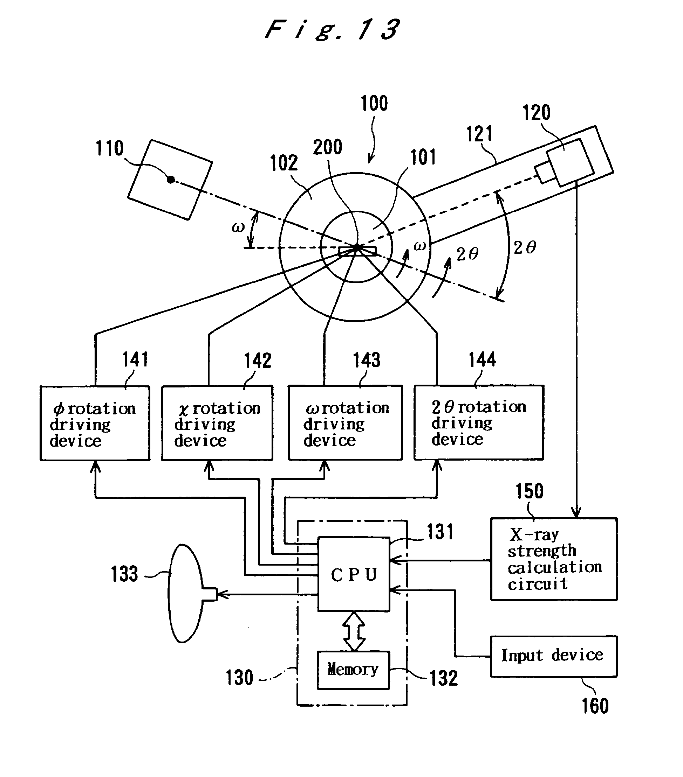

Figs. 12 and 13 show an example of the diffraction measurement system of this invention.

The diffraction measurement system of this invention includes, for example, a four-axis goniometer 110 provided with four rotating axes, an X-ray source 110 for producing X rays, a detector 120 for detecting diffraction beams, such as an X-ray counter, a controlling computer 130 having a CPU 131, a memory 132, and a CRT display 133, and a φ rotation driving device 141, a χ rotation driving device 142, an ω rotation driving device 143 and a 2θ rotation driving device 144 for driving the respective rotation axes of the four-axis goniometer 110. And, 101 is an ω rotation support, 102 is a 2θ rotation support, 160 is a input device for input to the controlling computer 130.

Although the structure itself for diffraction measurement is well known, the system has a feature that the simulated diffraction conditions obtained by the diffraction condition simulation device of this invention are used, and the operation and the like are controlled by the controlling computer 130 in accordance with the simulated diffraction conditions. In Fig. 13, the diffraction condition simulation device is stored as a software in the memory 132 of the controlling computer 130.

More specifically, when the φ, χ, ω and 2θ angle as diffraction conditions obtained by the diffraction condition simulation device of this invention are given to the CPU 131 of the controlling computer 130, the CPU 131 controls each of the φ rotation driving device 141, the χ rotation driving device 142, the ω rotation driving device 143 and the 2θ rotation driving device 144, thereby rotating each axis of the four-axis goniometer 100 so that each of an actual φ, χ, ω, and 2θ becomes equal to the value of its simulated angle.

Then, for example, the detector 120 disposed on a detector arm 121 scans a definite space automatically and detects a main reciprocal lattice point, that is, the Bragg reflection, and an X-ray intensity calculation circuit 150 measures the value of its intensity on an equatorial plane consisting of incident X rays, a crystal sample, and the detector.

In this diffraction measurement system, when the crystal is rotated to satisfy the diffraction conditions, although there are three freedoms of ω, χ, and φ angle, the number of freedoms necessary for setting a diffraction point is two. That is, since one surplus freedom exists, it is possible to make measurement by rotating a specific reflection around its scattering vector, that is, along a normal of a diffracting crystal plane. Thus, multiple reflections and the like can be detected.

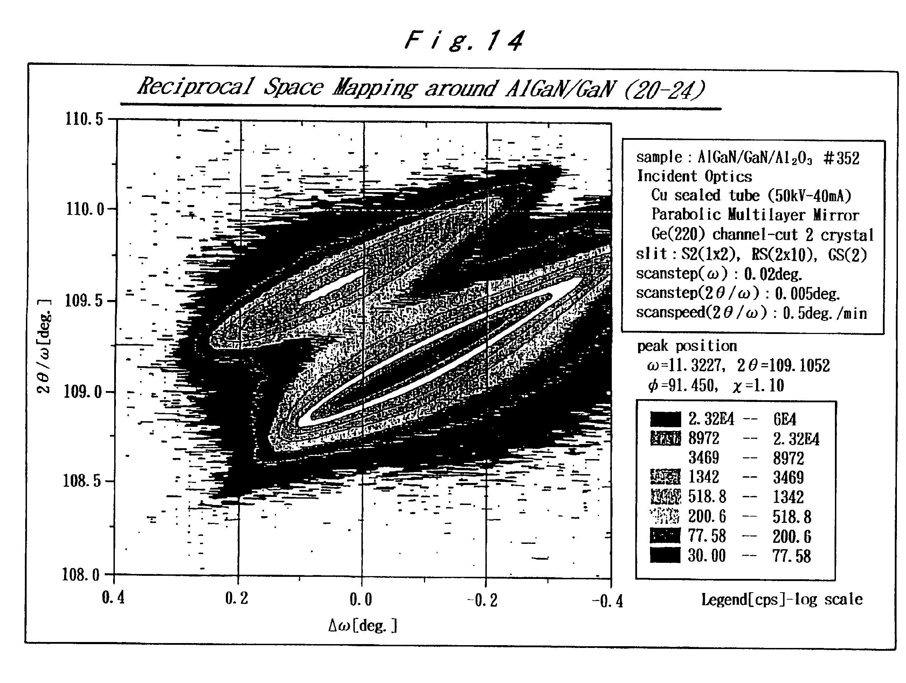

As described above, the diffraction measurement system of this invention uses diffraction conditions simulated by the diffraction condition simulation device of this invention, and can actually measure the Bragg reflection satisfying the diffraction conditions. It is needless to say that in an actual measurement, for example, it is possible to measure a region in the vicinity of a Bragg reflection in a mesh-like manner. The mesh-like measurement itself of the region in the vicinity of a Bragg reflection is well known, and its measurement result is generally called a reciprocal lattice map. Fig. 14 shows an example of the reciprocal lattice map measured by the diffraction measurement system of this invention. In the example shown in Fig. 14, an AlGaN/GaN thin film is used as a crystal sample.

Since it is sufficient if the diffraction simulation device can give simulated diffraction conditions to the diffraction measurement system, more specifically, to the controlling computer 130 of the diffraction measurement system, other than the case where the diffraction simulation device is included as software in the controlling computer 130, it may be included in a separate computer or may be made a separate device. The diffraction simulation device made a separate computer or separate device is connected to the controlling computer 130 of the diffraction measurement system through connecting means or the like, and the simulated diffraction conditions are transmitted to the controlling computer 130.

Further, the system exemplified in Fig. 13 can also be made a crystal analysis system of this invention for analyzing a crystal sample 200 by using the measured Bragg reflection. That is, by providing the controlling computer 130 with analyzing means, the structure analysis, evaluation and the like of the crystal sample can be made with the use of the measured Bragg reflection. For example, an analyzing program as such analyzing means can be stored in the memory 132 of the controlling computer 130.

Of course, the crystal analysis system may be provided as a separate body from the diffraction measurement system, and in this case, the Bragg reflection measured by the diffraction measurement system is transmitted to the crystal analysis system through connection means and the like.

And, although the diffraction measurement system and the crystal analysis system of this invention are provided with a well-known four-circle goniometer, it is needless to say that the goniometer is not limited to the four-circle type, but a goniometer with five, six, or more axes can be applied to the system, using the diffraction conditions, that is, the φ, χ, ω, and 2θ angle, simulated by the diffraction condition simulation device as basic angles.

Although X rays are used as incident beams in the above embodiment, it is needless to say that excellent simulation of a diffraction phenomenon can be made also for particle beams such as neutral beams or electron beams, similarly to the case of the X rays.

The crystal sample as the object of the diffraction condition simulation device, the diffraction measurement system, and the crystal analysis system of this invention includes any crystallized sample, for which a reciprocal lattice can be expressed.

As described above in detail, by the diffraction condition simulation device of this invention, the diffraction plane containing reciprocal lattice points is displayed in accordance with continuous rotation of the reciprocal lattice, and the structure factor of each of the reciprocal lattice points is also displayed, so that simulation of a desired Bragg reflection can be quickly and easily calculated and displayed. It is also possible to distinguish the diffraction intensity and to differentiate a general reflection from a forbidden reflection, and in addition, it is possible to arbitrarily specify the ω, χ, and φ angle which determine the orientation of a crystal sample, the incident angle and the outgoing angle of X rays or particle beams and to control and set them as diffraction conditions. Accordingly, display of reciprocal lattices expressing various Bragg reflections can be made, and excellent evaluation and analysis of crystal structure can be realized.

Furthermore, by the diffraction measurement system and the crystal analysis system of this invention, it becomes possible, with the use of diffraction conditions obtained by the diffraction condition simulation device of this invention, to extremely easily make actual measurement of a thin film, for example, based on an asymmetrical reflection in which a diffraction vector from the origin to a reciprocal lattice point does not coincide with a sample normal, or based on the graging incidence of X rays or particle beams to the crystal sample surface, and also to analyze the crystal structure of a sample using the obtained result, and so on.

In conclusion, the diffraction condition simulation device, the diffraction measurement system, and the crystal analysis system of this invention can have great effects on analysis of crystal structures and structure evaluation of single crystals including semiconductor thin films and the others.

This invention should not be limited only to the aforementioned embodiments, and it will be understood by those skilled in the art that other changes in form and details may be made therein without departing from the invention.

## Claims

1. A diffraction condition simulation device for calculating the reciprocal lattice to a crystal sample and displaying, on a computer screen, Bragg reflection conditions of X rays or particle beams caused by the crystal sample, the device comprising:
means for inputting and storing intrinsic crystal information;
means for inputting non-intrinsic sample information to determine the orientation of the simulated crystal sample;
means for calculating the co-ordinates of all the reciprocal lattice points within the limiting sphere of the simulated crystal sample using said sample and crystal data;
means for displaying, on a computer screen, the cross section of the limiting sphere which intersects with a diffraction plane, and all reciprocal lattice points contained within this cross section;
input means for adjusting the orientation of the simulated crystal sample;
wherein the device is arranged such that the displayed reciprocal lattice points rotate with the rotation of the simulated crystal sample such that previously calculated reciprocal lattice points are placed and displayed on the diffraction plane continuously during rotation.

2. A diffraction condition simulation device according to claim 1, wherein all diffraction conditions which one of a plurality of Bragg reflections satisfies are displayed on the computer screen when a crystal of the simulated crystal sample is rotated along an axis connecting origin of the reciprocal lattice to one of the plurality of reciprocal lattice points.

3. A diffraction condition simulation device according to claim 1 or 2, wherein the simulated crystal sample is rotated in correspondence to a moving direction of a pointer on the computer screen, and the reciprocal lattice in the limiting sphere is rotated with the rotation of the crystal.

4. A diffraction condition simulation device according to any one of claims 1 to 3, wherein slide selecting means for selecting numerical values of an ω angle, a χ angle, and a φ angle of orientation of the simulated crystal sample is displayed on the computer screen, the crystal is rotated with slide of the slide selecting means, and the reciprocal lattice in the limiting sphere is rotated with the rotation of the crystal orientation.

5. A diffraction condition simulation device according to any one of claims 1 to 4, wherein each of the plurality of reciprocal lattice points in the cross section of the limiting sphere is displayed together with its Miller indices on the computer screen.

6. A diffraction condition simulation device according to any one of claims 1 to 5, wherein the calculating means further calculates the structure factor of each of the reciprocal lattice points of the crystal sample within the limiting sphere.

7. A diffraction condition simulation device according to claim 6, wherein each of the plurality of reciprocal lattice points in the cross section of the limiting sphere is displayed such that a difference in magnitude of the structure factor appears in accordance with the magnitude of the structure factor.

8. A diffraction condition simulation device according to claim 6 or 7, wherein the structure factor of a desired reciprocal lattice point among the plurality of reciprocal lattice points in the cross section of the limiting sphere is displayed by specifying the desired reciprocal lattice point.

9. A diffraction condition simulation device according to any one of claims 6 to 8, wherein Miller indices of each of the plurality of reciprocal lattice points is arranged in order of magnitude of the structure factor.

10. A diffraction condition simulation device according to any one of claims 6 to 9 wherein the device further comprises means for calculating the intensity of reflection at each reciprocal lattice point, using its associated structure factor, and differentiating reciprocal lattice points having a general reflection from those having a forbidden reflection.

11. A diffraction condition simulation device according to any one of claims 1 to 10, wherein the Miller indices of each of the plurality of reciprocal lattice points is arranged in order of size of its Bragg angle.

12. A diffraction condition simulation device according to any one of claims 9 to 11 wherein the cross section of the limiting sphere containing a desired reciprocal lattice point among the plurality of reciprocal lattice points is displayed by specifying the Miller indices of the desired reciprocal lattice point.

13. A diffraction condition simulation device according to any one of claims 1 to 12, wherein a peripheral region containing one or more of the plurality of reciprocal lattice points is freely enlarged.

14. A diffraction condition simulation device according to any one of claims 1 to 13, wherein at least one of an incident angle of X rays to the crystal sample, an outgoing angle from the crystal sample, a χ angle of the crystal sample, a φ angle of the crystal sample, and an ω angle of the crystal sample can be arbitrarily inputted.

15. A diffraction condition simulation device according to claim 14, wherein after one of the plurality of Bragg reflections is specified, when at least one of the incident angle of the X rays to the crystal sample, the outgoing angle from the crystal sample, the χ angle of the crystal sample, the φ angle of the crystal sample, and the ω angle of the crystal sample is given, all of the other angles are calculated for the Bragg reflection specified and are displayed in the cross section of the limiting sphere.

16. A diffraction condition simulation device according to claim 15 wherein the device further evaluates whether the ω angle, the φ angle, the χ angle, the incident angle and the outgoing angle exist in a blind region where actual measurement of the Bragg reflection cannot be made and, if this is found to be the case, the ω angle, the φ angle and the χ angle are newly calculated in a symmetrical diffraction condition where the incident angle is equal to the outgoing angle, and these angles are set as the diffraction condition.

17. A diffraction condition simulation device according to any one of claims 1 to 16, wherein directions of the incident and outgoing reflection beams for X rays or particle beams can be inverted.

18. A diffraction condition simulation device according to any preceding claim, further comprising a diffraction measurement system arranged to orientate a crystal sample in accordance with the simulated crystal orientation.

19. A diffraction measurement system comprising a diffraction condition simulation device as claimed in any of claims 1 to 18; and a measurement device for measuring the Bragg reflection of X rays or particle beams by a crystal sample which satisfies a diffraction condition simulated by said diffraction condition simulation device.

20. A diffraction measurement system according to claim 19, wherein a region in the vicinity of the Bragg reflection is measured in a mesh-like manner.

21. A crystal analysis system comprising a diffraction measurement system as claimed in claim 19 or 20; and analysis means for analysing a crystal sample with the use of the Bragg reflection measured by said diffraction measurement system.

22. A method of calculating the reciprocal lattice to a crystal sample and displaying, on a computer screen, Bragg reflection conditions of X rays or particle beams caused by the crystal sample, comprising the steps of:
inputting crystal sample data;
retrieving intrinsic crystal information;
calculating the co-ordinates of all the reciprocal lattice points within the limiting sphere of the simulated crystal sample;
displaying, on a computer screen, the cross section of the limiting sphere which intersects with a diffraction plane and all reciprocal lattice points contained within this cross section,
altering the orientation of the simulated crystal sample,
simultaneously rotating the previously calculated reciprocal lattice points such that the display is continuously updated during rotation.

## Patentansprüche

1. Diffraktionszustandssimulationsvorrichtung zum Berechnen des reziproken Gitters einer bzw. zu einer Kristallprobe und zum Anzeigen von durch die Kristallprobe bewirkten Bragg-Reflexionszuständen von Röntgen- oder Teilchen- bzw. Partikelstrahlen auf einem Computerbildschirm, wobei die Vorrichtung aufweist:
Mittel zum Eingeben und Speichern intrinsischer Kristallinformationen;
Mittel zum Eingeben nichtintrinsischer Probeninformationen zur Bestimmung der Orientierung der simulierten Kristallprobe;
Mittel zum Berechnen der Koordinaten aller reziproker Gitterpunkte in der begrenzenden Sphäre der simulierten Kristallprobe unter Verwendung der Probe und von Kristalldaten;
Mittel zum Anzeigen des Querschnitts der begrenzenden Sphäre, die sich mit einer Diffraktionsebene schneidet, und aller reziproker Gitterpunkte, die in diesem Querschnitt enthalten sind, auf einem Computerbildschirm;
Eingabemittel zum Einstellen der Orientierung der simulierten Kristallprobe;
wobei die Vorrichtung so eingerichtet bzw. angeordnet ist, dass sich die reziproken Gitterpunkte mit der Drehung der simulierten Kristallprobe derart drehen, dass zuvor berechnete reziproke Gitterpunkte während der Drehung kontinuierlich auf der Diffraktionsebene angeordnet und angezeigt werden.

2. Diffraktionszustandssimulationsvorrichtung nach Anspruch 1, bei der alle Diffraktionszustände, welche eine aus einer Anzahl von Bragg-Reflexionen erfüllt, auf den Computerbildschirm angezeigt werden, wenn ein Kristall der simulierten Kristallprobe entlang einer Achse gedreht wird, die einen Ursprung des reziproken Gitters mit einem aus der Anzahl reziproker Gitterpunkte verbindet.

3. Diffraktionszustandssimulationsvorrichtung nach Anspruch 1 oder 2, bei der die simulierte Kristallprobe entsprechend einer Bewegungsrichtung einer Zeigeeinrichtung auf dem Computerbildschirm gedreht wird, und das reziproke Gitter in der begrenzenden Sphäre mit der Drehung des Kristalls gedreht wird.

4. Diffraktionszustandssimulationsvorrichtung nach einem der Ansprüche 1 bis 3, bei der Gleit- bzw. Schiebeauswahlmittel zum Auswählen numerischer Werte eines Winkels ω, eines Winkels χ und eines Winkeis φ einer Orientierung der simulierten Kristallprobe auf dem Computerschirm angezeigt werden, der Kristall mit einem Schieben der Schiebeauswahlmittel gedreht wird, und das reziproke Gitter in der begrenzenden Sphäre mit einer Drehung der Kristallorientierung gedreht wird.

5. Diffraktionszustandssimulationsvorrichtung nach einem der Ansprüche 1 bis 4, bei der jeder aus der Anzahl reziproker Gitterpunkte in dem Querschnitt der begrenzenden Sphäre zusammen mit seinen Miller-Indizes auf dem Computerschirm angezeigt wird.

6. Diffraktionszustandssimulationsvorrichtung nach einem der Ansprüche 1 bis 5, bei der die Berechnungsmittel ferner den Strukturfaktor eines jeden der reziproken Gitterpunke der Kristallprobe in der begrenzenden Sphäre berechnen.

7. Diffraktionszustandssimulationsvorrichtung nach Anspruch 6, bei der jeder der Anzahl reziproker Gitterpunkte in dem Querschnitt der begrenzenden Sphäre derart angezeigt wird, dass ein Unterschied in der Größe bzw. Magnitude des Strukturfaktors in Entsprechung zu der Magnitude des Strukturfaktors erscheint.

8. Diffraktionszustandssimulationsvorrichtung nach Anspruch 6 oder 7, bei der der Strukturfaktor eines gewünschten reziproken Gitterpunkts aus der Anzahl reziproker Gitterpunkte in dem Querschnitt der begrenzenden Sphäre durch Spezifikation des gewünschten reziproken Gitterpunkts angezeigt wird.

9. Diffraktionszustandssimulationsvorrichtung nach einem der Ansprüche 6 bis 8, bei der Miller-Indizes eines jeden der Anzahl reziproker Gitterpunkte in Reihenfolge der Magnitude des Strukturfaktors angeordnet wird bzw. werden.

10. Diffraktionszustandssimulationsvorrichtung nach einem der Ansprüche 6 bis 9, wobei die Vorrichtung ferner Mittel zum Berechnen der Intensität der Reflexion an jedem reziproken Gitterpunkt unter Verwendung seines zugeordneten Strukturfaktors und Differenzieren reziproker Gitterpunkte mit einer allgemeinen Reflexion von jenen, mit einer verbotenen Reflexion aufweist.

11. Diffraktionszustandssimulationsvorrichtung nach einem der Ansprüche 1 bis 10, bei der die Miller-Indizes eines jeden der Anzahl reziproker Gitterpunkte in Reihenfolge der Größe seines Bragg-Winkels angeordnet wird bzw. werden.

12. Diffraktionszustandssimulationsvorrichtung nach einem der Ansprüche 9 bis 11, bei der der Querschnitt der begrenzenden Sphäre, welche einen gewünschten reziproken Gitterpunkt aus der Anzahl reziproker Gitterpunkte enthält, durch Angabe der Miller-Indizes des gewünschten reziproken Gitterpunkts angezeigt wird.

13. Diffraktionszustandssimulationsvorrichtung nach einem der Ansprüche 1 bis 12, bei der eine periphere Region, welche eine oder mehrere der Anzahl reziproker Gitterpunkte enthält, frei vergrößert wird.

14. Diffraktionszustandssimulationsvorrichtung nach einem der Ansprüche 1 bis 13, bei der wenigstens ein Einfallswinkel von Röntgenstrahlen auf die Kristallprobe, ein Ausfallwinkel von der Kristallprobe, ein χ-Winkel der Kristallprobe, ein φ-Winkel der Kristallprobe und/oder ein ω-Winkel der Kristallprobe beliebig eingegeben werden kann bzw. können.

15. Diffraktionszustandssimulationsvorrichtung nach Anspruch 14, bei der, nachdem eine aus der Anzahl von Bragg-Reflexionen spezifiziert wurde, wenigstens der Einfallswinkel der Röntgenstrahlen auf die Kristallprobe, der Ausfallswinkel von der Kristallprobe, ein χ-Winkel der Kristallprobe, der φ-Winkel der Kristallprobe, und/oder der ω-Winkel der Kristallprobe angegeben wird, alle der anderen Winkel für die spezifizierte Bragg-Reflexion berechnet werden und in dem Querschnitt der begrenzenden Sphäre angezeigt werden.

16. Diffraktionszustandssimulationsvorrichtung nach Anspruch 15, wobei die Vorrichtung ferner einschätzt, ob der ω-Winkel, der φ-Winkel, der χ-Winkel, der Einfallswinkel und der Ausfallswinkel sich in einem Blindbereich bzw. toten Winkel befinden, in dem eine tatsächliche Messung der Bragg-Reflexion nicht durchgeführt werden kann, und sofern dies als zutreffend festgestellt wird, der ω-Winkel, der φ-Winkel und der χ-Winkel in einem symmetrischen Diffraktionszustand neu berechnet werden, wobei der Einfallswinkel gleich dem Ausfallswinkel ist, und diese Winkel als der Diffraktionszustand eingestellt werden.

17. Diffraktionszustandssimulationsvorrichtung nach einem der Ansprüche 1 bis 16, bei der Richtungen der Einfalls- und Ausfallsreflexionsstrahlen für Röntgenstrahlen oder Partikelstrahlen invertiert werden können.

18. Diffraktionszustandssimulationsvorrichtung nach einem der vorstehenden Ansprüche, die ferner ein Diffraktionsmesssystem aufweist, das dafür eingerichtet ist, eine Kristallprobe in Entsprechung zu der simulierten Kristallorientierung zu orientieren.

19. Diffraktionsmesssystem mit einer Diffraktionszustandssimulationsvorrichtung nach einem der Ansprüche 1 bis 18, und einer Messvorrichtung zum Messen der Bragg-Reflexion von Röntgen- oder Teilchenstrahlen durch eine Kristallprobe, welche einen durch die Diffraktionszustandssimulationsvorrichtung simulierten Diffraktionszustand erfüllt.

20. Diffraktionsmesssystem nach Anspruch 19, bei dem ein Bereich in Nachbarschaft zu der Bragg-Reflexion in einer maschenförmigen weise gemessen wird.

21. Kristallanalysesystem mit einem Diffraktionsmesssystem nach einem der Ansprüche 19 oder 20 und Analysemitteln zum Analysieren einer Kristallprobe unter Verwendung der Bragg-Reflexion, die durch das Diffraktionsmesssystem gemessen wurde.

22. Verfahren zum Berechnen des reziproken Gitters einer Kristallprobe und zum Anzeigen von durch die Kristallprobe bewirkten Bragg-Reflexionszuständen von Röntgen- oder Partikelstrahlen auf einem Computerbildschirm, das die Schritte beinhaltet:
Eingeben von Kristallprobendaten;
Abrufen bzw. Erhalten von intrinsischen Kristallinformationen;
Berechnen der Koordinaten aller reziproker Gitterpunkte in der begrenzenden Sphäre der simulierten Kristallprobe;
Anzeigen des Querschnitts der begrenzenden Sphäre, welche sich mit einer Diffraktionsebene schneidet, und aller reziproker Gitterpunkte, die in diesem Querschnitt enthalten sind, auf einen Computerbildschirm;
Verandern der Orientierung der simulierten Kristallprobe;
simultanes Drehen der zuvor berechneten reziproken Gitterpunkte, so dass die Anzeige während der Drehung kontinuierlich aufgefrischt wird.

## Revendications

1. Dispositif de simulation de conditions de diffraction pour calculer le réseau réciproque pour un échantillon de cristal et afficher, sur un écran d'ordinateur, des conditions de réflexion de Bragg de rayons X ou des faisceaux de particules générés par l'échantillon de cristal, le dispositif comportant :
des moyens pour entrer et mémoriser des informations de cristal intrinsèques ;
des moyens pour entrer des informations d'échantillon non-intrinsèques afin de déterminer l'orientation de l'échantillon de cristal simulé ;
des moyens pour calculer les coordonnées de tous les points du réseau réciproque au sein de la sphère limite de l'échantillon de cristal simulé en utilisant ledit échantillon et des données de cristal ;
des moyens pour afficher, sur un écran d'ordinateur, la section efficace de la sphère limite qui coupe un plan de diffraction, et tous les points du réseau réciproque contenus dans cette section efficace ;
des moyens d'entrée pour ajuster l'orientation de l'échantillon de cristal simulé ;
dans lequel le dispositif est agencé de sorte que les points du réseau réciproque affichés tournent avec la rotation de l'échantillon de cristal simulé de sorte que des points du réseau réciproque calculés précédemment sont placés et affichés sur le plan de diffraction continuellement pendant la rotation.

2. Dispositif de simulation de conditions de diffraction selon la revendication 1, dans lequel toutes les conditions de diffraction, l'une d'elles satisfaisant à une réflexion de Bragg parmi une pluralité de réflexions de Bragg, sont affichées sur l'écran d'ordinateur lorsqu'un cristal de l'échantillon de cristal simulé est mis en rotation le long d'un axe reliant l'origine du réseau réciproque à un point parmi la pluralité de points du réseau réciproque.

3. Dispositif de simulation de conditions de diffraction selon la revendication 1 ou 2, dans lequel l'échantillon de cristal simulé est mis en rotation en correspondance avec une direction de déplacement d'un pointeur sur l'écran d'ordinateur, et le réseau réciproque dans la sphère limite est mis en rotation conjointement à la rotation du cristal.

4. Dispositif de simulation de conditions de diffraction selon l'une quelconque des revendication 1 à 3, dans lequel des moyens de sélection de coulisse pour sélectionner des valeurs numériques d'un angle ω, d'un angle χ et d'un angle φ d'orientation de l'échantillon de cristal simulé sont affichés sur l'écran d'ordinateur, le cristal est mis en rotation à l'aide de la coulisse des moyens de sélection de coulisse, et le réseau réciproque dans la sphère limite est mis en rotation conjointement à la rotation de l'orientation du cristal.

5. Dispositif de simulation de conditions de diffraction selon l'une quelconque des revendications 1 à 4, dans lequel chaque point parmi la pluralité de points du réseau réciproque dans la section efficace de la sphère limite est affiché conjointement avec ses indices de Miller sur l'écran d'ordinateur.

6. Dispositif de simulation de conditions de diffraction selon l'une quelconque des revendications 1 à 5, dans lequel les moyens de calcul calculent en outre le facteur structurel de chacun des points du réseau réciproque de l'échantillon de cristal au sein de la sphère limite.

7. Dispositif de simulation de conditions de diffraction selon la revendication 6, dans lequel chaque point parmi la pluralité de points du réseau réciproque dans la section efficace de la sphère limite est affiché de sorte qu'une différence de grandeur du facteur structurel apparaît conformément à la grandeur du facteur structurel.

8. Dispositif de simulation de conditions de diffraction selon la revendication 6 ou 7, dans lequel le facteur structurel d'un point du réseau réciproque voulu parmi la pluralité de points du réseau réciproque dans la section efficace de la sphère limite est affiché en spécifiant le point du réseau réciproque voulu.

9. Dispositif de simulation de conditions de diffraction selon l'une quelconque des revendications 6 à 8, dans lequel des indices de Miller de chaque point parmi la pluralité de points du réseau réciproque sont agencés dans l'ordre de grandeur du facteur structurel.

10. Dispositif de simulation de conditions de diffraction selon l'une quelconque des revendications 6 à 9, dans lequel le dispositif comporte en outre des moyens pour calculer l'intensité de la réflexion au niveau de chaque point du réseau réciproque, en utilisant son facteur structurel associé, et en différenciant ou pour différencier des points du réseau réciproque ayant une réflexion générale de ceux ayant une réflexion interdite.

11. Dispositif de simulation de conditions de diffraction selon l'une quelconque des revendications 1 à 10, dans lequel les indices de Miller de chaque point parmi la pluralité de points du réseau réciproque sont agencés dans l'ordre de taille de leur angle de Bragg.

12. Dispositif de simulation de conditions de diffraction selon l'une quelconque des revendications 9 à 11, dans lequel la section efficace de la sphère limite contenant un point du réseau réciproque voulu parmi la pluralité de points du réseau réciproque est affichée en spécifiant les indices de Miller du point du réseau réciproque voulu.

13. Dispositif de simulation de conditions de diffraction selon l'une quelconque des revendications 1 à 12, dans lequel une région périphérique contenant un ou plusieurs points parmi la pluralité de points du réseau réciproque est librement agrandie.

14. Dispositif de simulation de conditions de diffraction selon l'une quelconque des revendications 1 à 13, dans lequel au moins l'un parmi un angle incident de rayons X sur l'échantillon de cristal, un angle sortant de l'échantillon de cristal, un angle χ de l'échantillon de cristal, un angle φ de l'échantillon de cristal et un angle ω de l'échantillon de cristal peut-être entré de manière arbitraire.

15. Dispositif de simulation de conditions de diffraction selon la revendication 14, dans lequel une fois qu'une réflexion parmi la pluralité de réflexions de Bragg a été spécifiée, lorsqu'au moins l'un parmi un angle incident des rayons X sur l'échantillon de cristal, l'angle sortant de l'échantillon de cristal, l'angle χ de l'échantillon de cristal, l'angle φ de l'échantillon de cristal et l'angle ω de l'échantillon de cristal est donné, tous les autres angles sont calculés pour la réflexion de Bragg spécifiée et sont affichés dans la section efficace de la sphère limite.

16. Dispositif de simulation de conditions de diffraction selon la revendication 15, dans lequel le dispositif évalue en outre si l'angle ω, l'angle φ, l'angle χ, l'angle incident et l'angle sortant existent dans une région aveugle
dans laquelle une mesure réelle de la réflexion de Bragg ne peut pas être effectuée et, s'il est constaté que tel est le cas, l'angle ω, l'angle φ et l'angle χ sont à nouveau calculés dans une condition de diffraction symétrique où l'angle incident est égal à l'angle sortant, et ces angles sont définis en tant que condition de diffraction.

17. Dispositif de simulation de conditions de diffraction selon l'une quelconque des revendications 1 à 16, dans lequel des directions des faisceaux de réflexion incident et sortant pour des rayons X ou des faisceaux de particules peuvent être inversées.

18. Dispositif de simulation de conditions de diffraction selon l'une quelconque des revendications précédentes, comportant en outre un système de mesure de diffraction conçu pour orienter un échantillon de cristal conformément à l'orientation de cristal simulée.

19. Système de mesure de diffraction comportant un dispositif de simulation de conditions de diffraction comme revendiqué dans l'une quelconque des revendications 1 à 18, et un dispositif de mesure pour mesurer la réflexion de Bragg de rayons X ou de faisceaux de particules par un échantillon de cristal qui satisfait à une condition de diffraction simulée par ledit dispositif de simulation de conditions de diffraction.

20. Système de mesure de diffraction selon la revendication 19, dans lequel une région à proximité de la réflexion de Bragg est mesurée d'une manière de type maille.

21. Système d'analyse de cristal comportant un système de mesure de diffraction comme revendiqué dans la revendication 19 ou 20 ; et des moyens d'analyse pour analyser un échantillon de cristal en utilisant la réflexion de Bragg mesurée par ledit système de mesure de diffraction.

22. Procédé de calcul du réseau réciproque pour un échantillon de cristal et d'affichage, sur un écran d'ordinateur, des conditions de réflexion de Bragg de rayons X ou de faisceaux de particules générés par l'échantillon de cristal, comportant les étapes consistant à :
entrer des données d'échantillon de cristal ;
récupérer des informations de cristal intrinsèques ;
calculer les coordonnées de tous les points du réseau réciproque au sein de la sphère limite de l'échantillon de cristal simulé ;
afficher, sur un écran d'ordinateur, la section efficace de la sphère limite qui coupe un plan de diffraction et tous les points du réseau réciproque contenus dans cette section efficace,
modifier l'orientation de l'échantillon de cristal simulé,
mettre en rotation simultanément les points du réseau réciproque calculé précédemment de sorte que l'affichage est continuellement mis à jour pendant la rotation.
